# EUROPÄISCHE PATENTSCHRIFT

(11) **EP 1 259 564 B1**
(45) Veröffentlichungstag und Bekanntmachung des Hinweises auf die Patenterteilung: **01.12.2004**
(21) Anmeldenummer: 01953632.5
(22) Anmeldetag: 08.01.2001
(51) Int. Cl.: C08L 1/00, C08L 3/00, C08L 89/00, C08L 75/04, C08L 77/00, C08K 3/10, C08K 5/16

(54) **POLYMERZUSAMMENSETZUNG UND DARAUS HERGESTELLTER FORMKÖRPER**
POLYMER COMPOSITIONS AND MOULDED BODIES MADE THEREFROM
COMPOSITION POLYMERE ET CORPS MOULE FABRIQUE SUR LA BASE DE CELLE-CI

(30) Priorität: 21.02.2000 DE 10007794
(43) Veröffentlichungstag der Anmeldung: 27.11.2002
(73) Patentinhaber: Zimmer AG, 60388 Frankfurt (DE)
(72) Erfinder: ZIKELI, Stefan, A-4844 Regau (AT); ENDL, Thomas, A-4840 Vöcklabruck (AT); MARTL, Michael, Gert, 60325 Frankfurt am Main (DE)
(74) Vertreter: Grünecker, Kinkeldey, Stockmair & Schwanhäusser Anwaltssozietät
(86) Internationale Anmeldenummer: PCT/EP2001/000132
(87) Internationale Veröffentlichungsnummer: WO 2001/062844

(56) Entgegenhaltungen:
- DE-A- 19 618 271
- FR-A- 2 685 679
- US-A- 5 205 863
- PATENT ABSTRACTS OF JAPAN vol. 016, no. 076 (C-0914), 25. Februar 1992 (1992-02-25) & JP 03 269059 A (SUMITOMO METAL IND LTD), 29. November 1991 (1991-11-29)

## Beschreibung

Die Erfindung betrifft eine Polymerzusammensetzung, die ein biologisch abbaubares Polymer umfasst, sowie deren Verwendung zur Herstellung eines Formkörpers, den aus der Polymerzusammensetzung hergestellten Formkörper, ein Verfahren zu dessen Herstellung und dessen Verwendung und ein Kleidungsstück, das den Formkörper in Form von Fasern umfasst.

Polymerzusammensetzungen mit verschiedenen Additiven zur Herstellung von Formkörpem sind bekannt.

In der US-PS-5,766,746 ist ein Vlies aus Cellulosefasern beschrieben, die eine flammwidrige, phosphorhaltige Komponente beinhalten.

Die US-PS-5,565,007 beschreibt modifizierte Rayonfasem mit einem Modifiziermittel zur Verbesserung der Färbeeigenschaften der Fasern.

Aus der US-PS-4,055,702 sind schmelzgesponnene, kaltgezogene Fasern aus einem synthetischen, organischen Polymer mit Additiven bekannt. Diese Additive können Rezeptoren, flammwidrigmachende Mittel, Antistatikmittel, Stabilisatoren, Mehltauinhibitoren oder Antioxidationsmittel sein.

Aus "Lenzinger Berichte", 76/97, Seite 126 ist außerdem eine Lyocellfaser bekannt, die aus einer Celluloselösung in N-Methylmorpholin-N-Oxid (im nachstehenden "NMMNO") gesponnen wurde, der 0,5 bis 5 Gew.-%, bezogen auf das Gewicht der Cellulose, an Vemetzem zur Verbesserung des Nassscheuerwerts einverleibt werden können. Außerdem ist beschrieben, Lyocellfasem Carboxymethylchitin, Carboxymethylchitosan oder Polyethylenimin zur Verbesserung der fungiziden Eigenschaften, Polyethylenimin zur Metallionenadsorption und Farbstoffaufnahme, Hyaluronsäure zur Verbesserung der Bacterizideneigenschaften, Xanthan, Guaran, Carubin, Bassorin oder Stärke zur Verbesserung der Hydrophilie, der Wasseraufnahme und der Wasserdampfdurchlässigkeit oder Stärke zur beschleunigten enzymatischen Hydrolyse einzuverleiben.

Die WO 98/58015 beschreibt eine Zusammensetzung, welche feine Feststoffteilchen enthält zur Zumischung zu einer formbaren Lösung von Cellulose in einem wässrigen tertiären Aminoxid. Die Zusammensetzung besteht aus festen Teilchen, tertiärem Aminoxid, Wasser und mindestens einem weiteren Stoff. Dieser weitere Stoff kann ein Stabilisator oder ein Dispergiermittel sein. Die festen Teilchen können Pigmente sein.

Außerdem ist bekannt, dass hohe Konzentrationen an Eisen und Übergangsmetallen die Stabilität einer Spinnmasse aus Cellulose, NMMNO und Wasser beeinträchtigen. Hohe Konzentrationen an Eisen erniedrigen die Zersetzungstemperatur der Lösung so stark, dass explosionsartig verlaufende Zersetzungsreaktionen der Lösung auftreten können. In "Das Papier", F. A. Buitenhuijs 40.Jahrgang, Heft 12, 1986 ist die Zersetzung und Stabilisierung von Cellulose, gelöst in NMMNO, beschrieben. Dabei wird auch der Einfluß von Eisen - Fe(III) auf diese Celluloselösungen dargelegt. Bei einem Zusatz von 500 ppm an Fe(III) wurden über 40% des NMMNO in das Zersetzungsprodukt N-Methylmorpholin ("NMM") übergeführt. Wobei auch die Zugabe von Cu ⁺² die Lösungsstabilität vermindert. Die Zersetzungstemperatur (T onset °C) wurde bei Zugabe von Kupfer zu einer NMMO- Celluloselösung ohne Kupfer von 175 °C auf 114 °C bei Anwesenheit von 900 mg Kupfer/kg Masse gesenkt. Weiterhin ist der positive Effekt von Stabilisatoren, wie Propylgallate und Ellagsäure, beschrieben.

Beim Zusatz von Additiven zu Fasern ergeben sich außerdem Schwierigkeiten, die Eigenschaften der Fasem, wie mechanische Festigkeiten, Faserdehnungen, Schlingenfestigkeiten, Scheuereigenschaft, Anfärbbarkeiten zu erhalten.

In JP 1228916 ist eine Folie aus zwei Schichten aus gewebtem Material oder Vlies beschrieben, zwischen die mittels Klebstoffen oder durch Wärmeverschweißen feine Flocken aus Algenmaterial, wie aus *Rhodophyceae,* gefüllt sind. Dadurch wird eine Folie erhalten, die bei Verwendung die Gesundheit verbessert.

Diese Folie hat jedoch den Nachteil, dass das feinzerkleinerte Algenmaterial in Hohlräumen zwischen den beiden Schichten anwesend ist, wodurch das Algenmaterial bei einem Reißen der Folie austritt und durch die Schichten von der Umgebung getrennt ist. In den US-Psen 4,421,583 und 4,562,110 ist ein Verfahren beschrieben, bei dem Fasermaterial aus Alginat hergestellt wird. Dazu wird Alginat aus den Meerespflanzen durch Extraktionsverfahren gewonnen und das so erhaltene lösliche Alginat direkt zu Fasern versponnen.

In der DE 19544097 ist ein Verfahren zu Herstellung von Formkörpem aus Polysaccharidmischungen durch Auflösen von Cellulose und eines Zweitpolysaccharids in einem organischen, mit Wasser mischbaren Polysaccharidlösungsmittel, das auch ein Zweitlösungsmittel enthalten kann, Verformen der Lösung unter Druck durch eine Düse zu Formkörpem und Verfestigung der Formkörper durch Koagulation in einem Fällbad beschrieben. Als Zweitpolysaccharide, neben Cellulose, sind Hexosen mit glycosidischer 1,4 und 1,6 Verknüpfung, Uronsäuren und Stärke, insbesondere Pullulan, Carubin, Buaran, Hyaluronsäure, Pektin, Algin, Carrageenan oder Xanthan angeführt. Weiters ist beschrieben, dass neben einem Zweitpolysaccharid auch ein Drittpolysaccharid, vorzugsweise Chitin, Chitosan bzw. ein entsprechendes Derivat eingesetzt werden kann. Die nach diesem Verfahren erhaltenen Formkörper werden als Mittel für die Wasser- und/oder Schwermetallbindung, als Faser mit bakteriziden und/oder fungiziden Eigenschaften oder als Garn mit erhöhter Abbaugeschwindigkeit im Wiederkäuermagen eingesetzt.

Die Verwendung von Nukleierungsmitteln bei der Herstellung von Formkörpern aus thermoplastischen Hochpolymeren, insbesondere α-olefinischen Polymeren wird in US-PS 3,367,926 beschrieben. Als Nukleierungsmittel werden u.a. Aminosäuren, deren Salze und Proteine genannt.

Zur Reduzierung der Fibrillierungstendenz ist cellulosischen Formkörpem ist es bekannt, in einem Nachbehandlungsschritt an der frisch versponnenen oder getrockneten Faser Defibrillierungsmittel aufzubringen. Alle bisher bekannten Defibrillierungsmittel sind Vernetzungsmittel.

So werden gemäß der EP-A-0 538 977 Cellulose-Fasern in alkalischem Milieu mit einem chemischen Reagenz, das 2 bis 6 funktionelle Gruppen aufweist, weiche mit Cellulose reagieren können, zur Verringerung der Fibrillierungsneigung behandelt.

Ein weiteres Verfahren zur Reduzierung der Fibrillierungstendenz von cellulosischen Formkörpem mittels eines Textilhilfsmittels ist in der WO 99/19555 beschrieben. Bisher wurde noch keine Lösung zur Verringerung der Fibrillierung der Cellulosefasern während des Spinnprozesses gefunden.

Daher liegt der vorliegenden Erfindung die Aufgabe zugrunde, eine Polymerzusammensetzung, die ein Additiv enthält, mit einer guten Stabilität und Verarbeitbarkeit sowie einen daraus hergestellten Formkörper, der eine geringe Fibrillierungsneigung aufweist, und ein Verfahren zu dessen Herstellung zur Verfügung zu stellen.

Die Lösung dieser Aufgabe ist eine Polymerzusammensetzung, die ein biologisch abbaubares Polymer und ein Material aus Meerespflanzen und/oder Schalen von Meerestieren umfasst, ein daraus hergestellter Formkörper sowie ein Verfahren zu dessen Herstellung gemäß den Ansprüchen 1-5 und 13-22.

Eine weitere Lösung dieser Aufgabe ist eine Polymerzusammensetzung, die ein biologisch abbaubares Polymer und mindestens zwei Komponenten, ausgewählt aus der Gruppe, bestehend aus Sacchariden und deren Derivaten, Proteinen, Aminosäuren, Vitaminen und Metallionen umfasst, ein daraus hergestellter Formkörper sowie ein Verfahren zu dessen Herstellung gemäß den Ansprüchen 6-22.

Das biologisch abbaubare Polymer wird vorzugsweise ausgewählt aus der Gruppe, bestehend aus Cellulose, modifizierter Cellulose, Latex, Eiweiß pflanzlicher sowie tierischer Herkunft, insbesondere Cellulose, und Gemischen davon. Polyamide, Polyurethane und Gemische davon können ebenfalls verwendet werden, soweit diese biologisch abbaubar sind. Bevorzugt enthalten die erfindungsgemäße Polymerzusammensetzung und der daraus hergestellte Formkörper keine nicht biologisch abbaubaren Polymere oder Gemische davon.

Die erfindungsgemäßen Polymerzusammensetzungen können auch nicht biologisch abbaubare Polymere enthalten. Bestimmte Polymerlösungsmittel wie z.B. DMAc, DMSO oder DMF etc. können auch synthetische Polymere, wie aromatische Polyamide (Aramide), Polyacrylnitril (PACN) oder Polyvinylalkohole (PVA) lösen, die wiederum in Kombination mit bekannten Celluloselösungsmittel wie z.B. LiCl/ DMAc, DMSO/ PF, tertiäre Aminoxide/ Wasser zu Polymerzusammensetzungen kombiniert werden können.

Beispiele für modifizierte Cellulose beinhalten Carboxyethylcellulose, Methylcellulose, Nitratcellulose, Kupfercellulose, Viskosexanthogenat, Cellulosecarbamat und Celluloseacetat. Beispiele für Fasern aus Polykondensations- und Polymerisationsprodukten sind Polyamide, die mit Methyl-, Hydroxy- oder Benzylgruppen substituiert sind. Beispiele für Polyurethane sind solche, die auf der Basis von Polyesterpolyolen aufgebaut sind.

Das Material aus Meerespflanzen ist vorzugsweise ausgewählt aus der Gruppe, bestehend aus Algen, Kelp und Seegras, insbesondere Algen. Beispiele für Algen beinhalten Braunalgen, Grünalgen, Rotalgen, Blaualgen oder Gemische davon. Beispiele für Braunalgen sind *Ascophyllum spp., Ascophyllum nodosum, Alaria esculenta, Fucus serratus, Fucus spiralis, Fucus vesiculosus, Laminaria saccharina, Laminaria hyperborea, Laminaria digitata, Laminaria echroleuca* und Gemische davon. Beispiele für Rotalgen beinhalten *Asparagopsis armata, Chondrus cripus, Maerl beaches, Mastocarpus stellatus, Palmaria palmata* und Gemische davon. Beispiele für Grünalgen sind *Enteromorpha compressa, Ulva rigida* und Gemische davon. Beispiele für Blaualgen sind *Dermocarpa , Nostoc, Hapalosiphon, Hormogoneae, Porchlorone*. Eine Klassifiaktion der Algen ist dem Lehrbuch der Botanik für Hochschulen E.Strasburger; F.Noll; H.Schenk; A.F.W. Schimper; 33. Auflage Gustav Fischer Verlag, Stuttgart-Jena-New York; 1991 zu entnehmen.

Das Material aus Meerespflanzen kann auf verschiedene Art und Weise gewonnen werden. Zunächst wird es geerntet, wobei es drei verschiedene Emteverfahren gibt:
1. das Material aus Meerespflanzen, das an den Strand gewaschen wurde, wird gesammelt,
2. die Meerespflanzen werden von den Steinen geschnitten oder
3. die Meerespflanzen werden von Tauchern im Meer geerntet. Das nach dem letzten Verfahren erhaltene Material aus Meerespflanzen hat die höchste Qualität und ist reich an Vitaminen, Mineralstoffen, Spurenelementen und Polysacchariden. Für die Zwecke der vorliegenden Erfindung wird vorzugsweise nach diesem Verfahren geerntetes Material aus Meerespflanzen verwendet.

Das geerntete Material kann auf verschiedene Weisen weiterverarbeitet werden. Das Material aus Meerespflanzen kann bei Temperaturen bis zu 450°C getrocknet und unter Verwendung von Ultraschall, Nasskugelmühlen, Stiftmühlen oder gegenläufigen Mühlen zerkleinert werden, wodurch ein Pulver erhalten wird, welches gegebenenfalls auch noch zur Klassierung über eine Zyklonstufe geführt werden kann. Ein so erhaltenes Pulver kann erfindungsgemäß verwendet werden.

Außerdem kann dieses Pulver ein Material aus Meerespflanzen zusätzlich einem Extraktionsverfahren, beispielsweise mit Dampf, Wasser oder einem Alkohol, wie Ethanol, unterworfen werden, wodurch ein flüssiger Extrakt erhalten wird. Dieser Extrakt ist ebenfalls erfindungsgemäß verwendbar.

Das geemtete Material aus Meerespflanzen kann außerdem einer Cryo-Zerkleinerung unterworfen werden. Dabei wird es bei -50°C in Partikel mit ca. 100 µm zerkleinert. Falls es erwünscht ist, kann das so erhaltene Material weiter zerkleinert werden, wobei Partikel mit einer Größe von ca. 6 bis ca. 10 µm erhalten werden.

Das Material aus der äußeren Schale von Meerestieren wird vorzugsweise ausgewählt aus Meeressedimenten, zerkleinerten Schalen von Krabben oder Muscheln, Hummern, Krebsen, Garnelen, Korallen.

Eine typische Zusammensetzung eines Gemisches natürlichen Ursprungs zeigt Tabelle 1.

**Tabelle 1**

| **Komponenten (%)** | |
|---|---|
| Vitamine | 0,2% |
| Proteine | 5,7% |
| Fette | 2,6% |
| Feuchte | 10,7% |
| Asche | 15,4% |
| Kohlenhydrate | 65,6% |

Mineralien eines Gemisches natürlichen Ursprungs nach Tabelle 1 zeigt Tabelle 2.1.

**Tabelle 2.1**

| ELEMENT | Konzentration | ELEMENT | Konzentration | ELEMENT | Konzentration |
|---|---|---|---|---|---|
| | [mg/kg] | | [mg/kg] | | [mg/kg] |
| Natrium | 41.800 | Eisen | 895 | Aluminium | 1.930 |
| Magnesium | 2.130 | Nickel | 35 | Schwefel | 15.640 |
| Calcium | 19.000 | Kupfer | 6 | Molybdän | 16 |
| Mangan | 1.235 | Chlor | 36.800 | Kobalt | 12 |
| Phosphor | 2.110 | lod | 624 | Zinn | < 1 |
| Quecksilber | 2 | Blei | < 1 | Bor | 194 |
| Fluor | 326 | Zink | 35 | Strontium | 749 |

Mineralien eines Gemisches (Feuchte 94,9%, Glührückstand 90%) natürlichen Ursprungs zeigt Tabelle 2.2.

**Tabelle 2.2**

| ELEMENT | Konzentration | ELEMENT | Konzentration | ELEMENT | Konzentration |
|---|---|---|---|---|---|
| | [mg/kg] | | [mg/kg] | | [mg/kg] |
| Natrium | 5.100 | Eisen | 2.040 | Aluminium | < 5 |
| Magnesium | 24.000 | Nickel | 14 | Schwefel | 4.500 |
| Calcium | 350.000 | Kupfer | 10 | Molybdän | 39 |
| Mangan | 125 | Chlor | 1.880 | Kobalt | 6 |
| Phosphor | 800 | lod | 181 | Zinn | < 5 |
| Quecksilber | < 0,3 | Blei | 460 | Bor | 17 |
| Fluor | 200 | Zink | 37 | | |

Das Material aus Schalen von Meerestieren kann, im Falle von Meeressedimenten, direkt eingesetzt werden. Falls Material aus den Schalen von Krabben oder Muscheln, Hummem, Krebsen, Gamelen verwendet wird, wird dieses zerkleinert.

Es können auch Gemische aus Material aus Meerespflanzen und Schalen von Meerestieren sowie deren Extraktionsprodukte eingesetzt werden. Das Mengenverhältnis von Material aus Meerespflanzen und Schalen von Meerestieren ist vorzugsweise 50 Gew.-% zu 50 Gew.-%. Vorzugsweise wird Material aus Meerespflanzen erfindungsgemäß verwendet.

Das Material aus Meerespflanzen und/oder Schalen von Meerestieren kann in der Polymerzusammensetzung und dem daraus hergestellten Formkörper in einer Menge von 0,1 bis 30 Gew.-%, vorzugsweise 0,1 bis 15 Gew.-%, bevorzugter 1 bis 8 Gew.-%, insbesondere 1 bis 4 Gew.-%, bezogen auf das Gewichts des biologisch abbaubaren Polymers, anwesend sein. Insbesondere, wenn der Formkörper in Form einer Faser vorliegt, ist die Menge an Material aus Meerespflanzen und/oder Schalen von Meerestieren vorzugsweise 0,1 bis 15 Gew.-%, insbesondere 1 bis 5 Gew.-%.

Ein Beispiel für ein erfindungsgemäß verwendbares Material aus Meerespflanzen ist ein Pulver aus *Ascophyllum nodosum* mit einer Partikelgröße von 95 % < 40 µm, das 5,7 Gew.-% Protein, 2,6 Gew.-% Fett, 7,0 Gew.-% fasrige Bestandteile, 10,7 Gew.-% Feuchtigkeit, 15,4 Gew.-% Asche und 58,6 Gew.-% Kohlenwasserstoffe enthält. Außerdem enthält es Vitamine und Spurenelemente, wie Ascorbinsäure, Tocopherole, Carotin, Barium, Niacin, Vitamin K, Riboflavin, Nickel, Vanadium, Thiamin, Folsäure, Folinsäure, Biotin und Vitamin B₁₂. Zusätzlich enthält es Aminosäuren, wie Alanin, Arginin, Asparaginsäure, Glutaminsäure, Glycin, Leucin, Lysin, Serin, Threonin, Tyrosin, Valin und Methionin.

In einer weiteren Ausführungsform umfasst die Polymerzusammensetzung ein bioabbaubares Polymer und mindestens zwei Komponenten, ausgewählt aus der Gruppe, bestehend aus Sacchariden und deren Derivaten, Proteinen, Aminosäuren, Vitaminen und Metallionen. Die Komponenten können synthetischer Natur oder eines natürlichen Ursprungs sein. Diese Komponenten können in getrockneter Form oder mit einer Feuchte, die bevorzugt in einem Bereich zwischen 5 und 15% liegt, eingesetzt werden.

In einer bevorzugten Ausführungsform umfasst die Polymerzusammensetzung ein bioabbaubares Polymer und mindestens drei Komponenten, insbesondere bevorzugt mindestens vier Komponenten ausgewählt aus der Gruppe, bestehend aus Sacchariden und deren Derivaten, Proteinen, Aminosäuren, Vitaminen und Metallionen.

Besonders bevorzugt umfasst die Polymerzusammensetzung ein bioabbaubares Polymer und mindestens zwei Komponenten gewählt aus der Gruppe, bestehend aus Sacchariden und deren Derivaten und Aminosäuren.

Die mindestens zwei Komponenten ausgewählt aus der Gruppe, bestehend aus Sacchariden und deren Derivaten, Proteinen, Aminosäuren, Vitaminen und Metallionen können in der Polymerzusammensetzung und dem daraus hergestellten Formkörper in einer Menge von 0,1 bis 30 Gew.-%, bevorzugt 0,1 bis 15 Gew.-%, insbesondere in einer Menge von 4 bis 10 Gew.-% bezogen auf das Gewicht des bioabbaubaren Polymers, anwesend sein.

Die Saccharide können in Mengen von 0,05 bis 9 Gew.-%, bevorzugt in Mengen von 2 bis 6 Gew.-%, die Vitamine in Mengen von 0,00007 bis 0,04 Gew.-%, bevorzugt in Mengen von 0,003 bis 0,03 Gew.-%, die Proteine und/oder Aminosäuren in Mengen von 0,005 bis 4 Gew.-%, bevorzugt in Mengen von 0,2 bis 0,7 Gew.-% und die Metallionen und deren Gegenionen in Mengen von 0,01 bis 9 Gew.-%, bevorzugt in Mengen von 0,5 bis 1,6 Gew.-% bezogen auf das Gewicht des bioabbaubaren Polymers verwendet werden.

Das biologisch abbaubare Polymer wird vorzugsweise aus der gleichen Gruppe ausgewählt wie in der vorstehenden Ausführungsform.

Die verwendeten Saccharide oder deren Derivate können ausgewählt werden aus der Gruppe, bestehend aus Monosacchariden, Oligosacchariden und Polysacchariden. Bevorzugt eingesetzt werden Mischungen, die Alginsäure, Laminarin, Mannitol und Methylpentosanen enthalten.

Die verwendeten Proteine enthalten vorzugsweise Alanin, Arginin, Asparaginsäure, Glutaminsäure, Glycin, Leucin, Lysin, Serin, Threonin, Tyrosin, Valin und Methionin.

Die Aminosäuren sind vorzugsweise die gleichen, die in den verwendeten Proteinen enthalten sind.

Femer können die eingesetzten Vitamine ausgewählt werden aus der Gruppe, bestehend aus Ascorbinsäure, Tocopherol, Carotin, Niacin (Vitamin B3), Phytomenadion (Vitamin K), Riboflavin, Thiamin, Folsäure, Folinsäure, Biotin, Retinol (Vitamin A), Pyridoxin (Vitamin B6) und Cyanocobalamin (Vitamin B₁₂).

Die Metallionen können ausgewählt werden aus der Gruppe, bestehend aus Aluminium, Antimon, Barium, Bor, Calcium, Chrom, Eisen, Germanium, Gold, Kalium, Kobalt, Kupfer, Lanthan, Lithium, Magnesium, Mangan, Molybdän, Natrium, Rubidium, Selen, Silicium, Thallium, Titan, Vanadium, Wolfram, Zink und Zinn.

Die Gegenionen der Metallionen können z.B. Fluorid, Chlorid, Bromid, lodid, Nitrat, Phosphat, Carbonat und Sulfat sein. Der Anteil der Metallionen bzw. der zugehörigen Gegenionen wird so eingestellt, dass sich bei Veraschung der mindestens zwei Komponenten bzw. Polymerzusammensetzung ein Aschegehalt im Bereich von 5-95%, bevorzugt ein Bereich von 10-60% ergibt.

Für die erfindungsgemäßen Zwecke können Partikel des Materials aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen im Körngrößenbereich von 200 bis 400 µm, vorzugsweise 150 bis 300 µm, eingesetzt werden. Es können auch Partikel mit kleinen Komgrößen verwendet werden, wie 1 bis 100 µm, bevorzugt 0,1 bis 10 µm, bevorzugter 0,1 bis 7 µm, insbesondere 1 bis 5 µm (Meßmethode: Laserbeugung - Gerät: Sympatec Rhodos). Es können auch Komgrößengemische einheitlichen Materials bzw. unterschiedlichen Algenmaterials eingesetzt werden.

Um das Material aus Meerespflanzen und/oder Schalen von Meerestieren oder die mindestens zwei Komponenten in dieser Feinheit zu erhalten, kann das Material aus Meerespflanzen und/oder Schalen von Meerestieren oder die mindestens zwei Komponenten mit z. B. kommerziell erhältlichen Stiftmühlen zerkleinert werden und dann mit entsprechenden Sichtern die Feinfraktion abgetrennt werden. Ein solches Sichtverfahren von Toner für die Entwicklung elektrostatischer Bilder ist in der DE 19803107 beschrieben, wobei eine Feinfraktion mit ca. 5 µm aus dem Produkt ausgesichtet wird.

Bei diesem Verfahren kann jedoch nur der Feinanteil gewonnen werden und die Hauptfraktion wird dadurch nicht in der erfindungsgemäßen Polymerzusammensetzung eingesetzt.

Eine weitere Möglichkeit, das Material aus Meerespflanzen und/oder Schalen von Meerestieren oder die mindestens zwei Komponenten in der erforderlichen Korngröße zu erhalten, ist, das Material aus Meerespflanzen und/oder Schalen von Meerestieren oder die mindestens zwei Komponenten mittels Strahlmühlen mit statischen oder rotierenden, internen oder externen Sichtern zu zerkleinern. Strahlmühlen weisen üblicherweise eine flache zylindrische Mahlkammer auf, um die mehrere über den Umfang verteilte Strahldüsen angeordnet sind. Die Zerkleinerung beruht im wesentlichen auf einem gegenseitigen Austausch von kinetischer Energie. Im Anschluss an die durch Teilchenstoß erzielte Zerkleinerung schließt zur Mahlkammermitte eine Sichtzone an, wobei die Feinfraktion mittels statischen oder rotierenden, internen oder externen Sichtem ausgetragen wird. Die Grobfraktion verbleibt durch die Zentrifugalkräfte im Mahlraum und wird weiter zerkleinert. Ein Teil der schwer mahlbaren Komponenten kann durch geeignete Öffnungen aus dem Mahlraum ausgetragen werden. Entsprechende Strahlmühlen sind z.B. in US 1,935,344, EP 888818, EP 603602, DE 3620440 beschrieben.

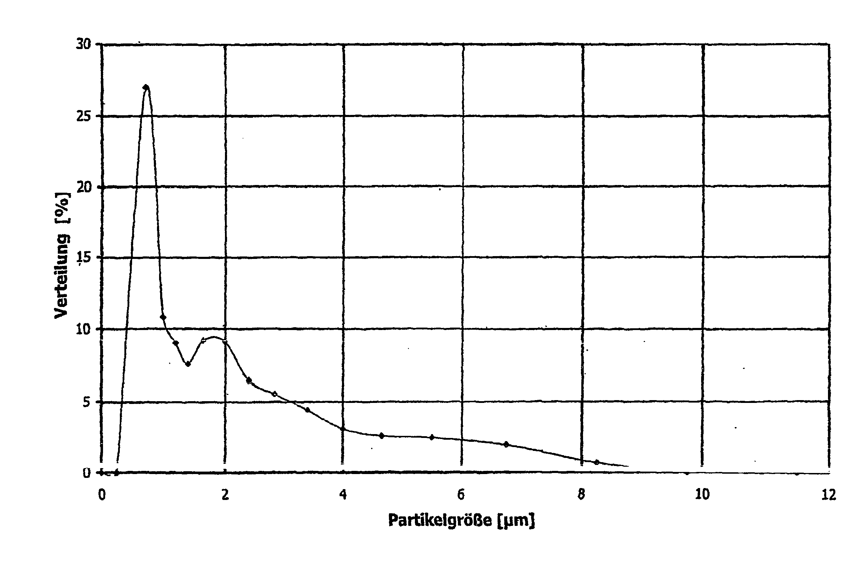

Eine typische Partikelgrößenverteilung ist in Figur 1 wiedergegeben.

Die erfindungsgemäßen Formkörper können mit herkömmlichen Verfahren aus der erfindungsgemäßen Polymerzusammensetzung hergestellt werden, wobei das biologisch abbaubare Polymer und das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen zur Herstellung der Polymerzusammensetzung zunächst gemischt und sodann der Formkörper hergestellt wird.

Das kontinuierliche oder diskontinuierliches Mischen des biologisch abbaubaren Polymers und des Materials aus Meerespflanzen und/oder Schalen von Meerestieren oder der mindestens zwei Komponenten, ausgewählt aus der Gruppe, bestehend aus Sacchariden und deren Derivaten, Proteinen, Aminosäuren, Vitaminen und Metallionen, kann mit Apparaten und Verfahren erfolgen, wie in WO 96/33221, US 5,626,810 und WO 96/33934 beschrieben.

Insbesondere bevorzugt liegt der erfindungsgemäße Formkörper in Form von Fasem, am bevorzugtesten in Form von Cellulosefasern vor. Der erfindungsgemäße Formkörper kann auch als Endlosfilament oder Membran oder in Form eines Schlauchs oder einer Flachfolie vorliegen.

Verfahren zur Herstellung der erfindungsgemäßen Cellulosefasern sind bekannt, wie das Lyocell oder NMMO -, Rayon- oder Viskose- oder das Carbamat-Verfahren.

Das Lyocell-Verfahren kann wie nachstehend beschrieben durchgeführt werden. Zur Herstellung einer verformbaren Masse sowie der erfindungsgemäßen Cellulosefasern wird eine Lösung aus Cellulose, NMMNO und Wasser dadurch hergestellt, dass zunächst eine Suspension aus Cellulose, NMMNO und Wasser gebildet wird und diese Suspension unter reduziertem Druck in einer 1 bis 20 mm dicken Schicht kontinuierlich über eine Wärmeaustauschfläche durch rotierende Elemente transportiert wird. Während dieses Vorgangs wird solange Wasser verdampft, bis eine homogene Celluloselösung entstanden ist. Die so erhaltenen Celluloselösungen können eine Menge an Cellulose von 2 bis 30 Gew.-%, an NMMNO von 68 bis 82 Gew.-% und an Wasser von 2 bis 17 Gew.-% enthalten. Falls es erwünscht ist, können dieser Lösung Additive, wie anorganische Salze, anorganische Oxide, feinverteilte organische Substanzen oder Stabilisatoren, zugesetzt werden.

Der so erhaltenen Celluloselösung wird sodann das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen in Form von Pulver, Pulversuspension oder in flüssiger Form, als Extrakt oder Suspension, kontinuierlich oder diskontinuierlich zugegeben.

Verfahrensbedingt kann das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen auch nach oder während der kontinuierlichen Zerkleinerung der trockenen Cellulose, beispielsweise in Form von Algenmaterial ursprünglicher Größe, als Pulver oder hochkonzentrierte Pulversuspension zugegeben werden. Die Pulversuspension kann in Wasser oder jedem beliebigen Lösungsmittel in der gewünschten und für das Verfahren benötigten Konzentration hergestellt werden.

Des weiteren besteht auch die Möglichkeit, das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen einem Pulpprozess mit gleichzeitiger Zerkleinerung oder einem Refiner zuzuführen. Das Pulpen kann entweder in Wasser, in Laugen oder aber in dem späteren zur Auflösung der Cellulose notwendigen Lösungsmittel durchgeführt werden. Auch hier kann das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen in fester, pulverförmiger, suspensionsförmiger Art oder aber auch in flüssiger Form zugegeben werden.

Die mit dem Material aus Meerespflanzen und/oder Schalen von Meerestieren oder mindestens zwei Komponenten, ausgewählt aus der Gruppe, bestehend aus Sacchariden und deren Derivaten, Proteinen, Aminosäuren, Vitaminen und Metallionen angereicherte Polymerzusammensetzung kann unter Anwesenheit eines Derivatisierungsmittels und /oder eines für den Löseprozeß bekannten Lösemittels in eine verformbare Extrusionsmasse übergeführt werden.

Eine weitere Möglichkeit der Zugabe des Materials aus Meerespflanzen und/oder Schalen von Meerestieren oder der mindestens zwei Komponenten, ausgewählt aus der Gruppe, bestehend aus Sacchariden und deren Derivaten, Proteinen, Aminosäuren, Vitaminen und Metallionen ist die Zugabe während eines kontinuierlich geführten Lösevorganges, wie in EP 356419 und US-PSen 5,049,690 und 5,330,567 beschrieben.

Alternativ kann die Zugabe diskontinuierlich unter Erhalt eines Master-Batch der Celluloselösung durchgeführt werden. Vorzugsweise wird das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen kontinuierlich zugegeben.

Das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen können in jeder anderen Stufe des Herstellungsverfahrens des Formkörpers zugesetzt werden. Beispielsweise kann es in ein Rohrleitungssystem mit entsprechender Vermischung durch darin angebrachte Statikmischerelemente bzw. Rührorganen, wie bekannte Inline Refiner oder Homogenisatoren, z. B. Geräte der Ultra Turrax, eingespeist werden. Wird das Verfahren im kontinuierlichen batch Betrieb, z.B. über eine Rührkesselkaskade, durchgeführt, so kann an der für das Verfahren optimalsten Stelle das Algenmaterial in fester, pulverförmiger, suspensionsförmiger oder flüssiger Form eingebracht werden. Die Feinverteilung kann mit bekannten auf das Verfahren abgestimmten Rührelementen erreicht werden.

Je nach eingesetzter Partikelgröße kann die gebildete inkorporierte Extrusions- oder Spinnmasse vor oder nach der Inkorporation filtriert werden. Bedingt durch die Feinheit des eingesetzten Produktes kann bei Spinnverfahren mit großen Düsendurchmessern auch auf eine Filtration verzichtet werden.

Handelt es sich um sehr sensitive Spinnmassen, kann über eine injektionsstelle das Material in geeigneter Form direkt vor der Spinndüse oder dem Extrusionswerkzeug zugeführt werden.

Eine weitere Möglichkeit ist es, falls das Algenmaterial oder die mindestens zwei Komponenten, ausgewählt aus der Gruppe, bestehend aus Sacchariden und deren Derivaten, Proteinen, Aminosäuren, Vitaminen und Metallionen in flüssiger Form vorliegen, diese während des Spinnvorganges dem kontinuierlich gesponnenen Faden zuzuführen.

Die so erhaltene Celluloselösung wird nach herkömmlichen Verfahren, wie dem dry-jetwet-, dem wet- spinning-, dem melt-blown-Verfahren, dem Zentrifugenspinnen, dem Trichterspinnen oder dem Trockenspinnverfahren versponnen. Bei einer Verspinnung nach dem dry-jet-wet spinning-Verfahren kann die Fadenschar im Luftspalt zwischen Düse im Fällbad auch durch Anblasung gekühlt werden. Als geeignet hat sich ein Luftspalt von 10-50 mm erwiesen, die Parameter für die Kühlluft sind vorzugsweise Lufttemperaturen von 5-35 °C mit einer relativen Feuchte bis zu 100%. Die Patentschriften US 5,589,125 und 5,939,000 sowie EP 0574870 B1 und WO 98/07911 beschreiben Spinnverfahren zur Herstellung von Cellulosefasern nach dem NMMO-Verfahren.

Gegebenenfalls werden die gebildeten Formkörper den herkömmlichen Chemiefasernachbehandlungsverfahren für Filamente oder Stapelfasern unterworfen.

Es wird eine erfindungsgemäße Cellulosefaser mit einem Material aus Meerespflanzen und/oder Schalen von Meerestieren oder mit mindestens zwei Komponenten, ausgewählt aus der Gruppe, bestehend aus Sacchariden und deren Derivaten, Proteinen, Aminosäuren, Vitaminen und Metallionen, bevorzugt mindestens drei Komponenten, insbesondere bevorzugt mindestens vier Komponenten erhalten.

Neben den Spinnverfahren bieten sich auch noch Extrusionsverfahren zur Herstellung von Flachfolien, Rundfolien , Häuten (Wursthäuten) sowie Membranen an.

Das Viskose-Verfahren kann folgendermaßen durchgeführt werden. Dabei wird Zellstoff mit ca. 90 bis 92 Gew.-% α-Cellulose mit wässriger NaOH behandelt. Danach wird die Cellulose durch Umsetzen mit Schwefelkohlenstoff in Cellulosexanthogenat umgewandelt und eine Viskoselösung durch Zusatz von wässriger NaOH unter ständigem Rühren erhalten. Diese Viskoselösung enthält ca. 6 Gew.-% Cellulose, 6 Gew.-% NaOH und 32 Gew.-% Schwefelkohlenstoff, bezogen auf den Cellulosegehalt. Nachdem die Suspension gerührt wurde, wird das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen, entweder als Pulver oder flüssigen Extrakt, zugesetzt. Falls es erwünscht ist, können übliche Additive, wie Tenside, Dispergiermittel oder Stabilisatoren, zugegeben werden.

Das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen können wiederum alternativ in jeder Stufe des Verfahrens zugegeben werden.

Sodann wird die so erhaltene Lösung zu Fasem gesponnen, wie beispielsweise in der US-PS-4,144,097 beschrieben.

Das Carbamat-Verfahren kann wie nachstehend beschrieben durchgeführt werden. Dazu wird aus Zellstoff mit ca. 92 bis 95 Gew.-% α-Cellulose Cellulose-Carbamat hergestellt, wie beispielsweise in der US-PS-5,906,926 oder der DE-PS-196 35 707 beschrieben. Dabei wird Alkalicellulose aus dem eingesetzten Zellstoff durch Behandeln mit wässriger NaOH hergestellt. Nach dem Zerfasern wird die Alkalicellulose einer Reife unterworfen, und sodann wird die Natronlauge ausgewaschen. Die so aktivierte Cellulose wird mit Harnstoff und Wasser vermischt und in einen Reaktor in ein Lösungsmittel eingebracht. Das so erhaltene Gemisch wird erwärmt. Das entstandene Carbamat wird abgetrennt und daraus eine Carbamatspinnlösung hergestellt, wie in der DE-PS-197 57 958 beschrieben. Dieser Spinnlösung wird das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen zugesetzt.

Die so erhaltene Spinnlösung wird nach bekannten Verfahren zu Fasem gesponnen, und es werden erfindungsgemäße Cellulosefasern erhalten.

Es hat sich überraschend herausgestellt, dass die erfindungsgemäßen Cellulosefasern trotz des Zusatzes eines Additivs dieselben hervorragenden Eigenschaften zeigen, wie Cellulosefasern ohne Additiv, bezüglich ihrer Feinheit, Reißkraft, Reißkraftvariation, Dehnung, Nassdehnung, feinheitsbezogenen Reißkraft, feinheitsbezogenen Nassreißkraft, feinheitsbezogenen Schlingenreißkraft, Nassscheuerung bei Bruch, Nassscheuerungsvariation und Nassmodul und gleichzeitig die durch das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen verliehenen positiven Eigenschaften zeigen. Dies ist insbesondere überraschend, da der Zusatz von Additiven zu Spinnmassen aus Cellulose, NMMNO und Wasser den Nachteil hat, dass sich diese bei der Verwendungstemperatur verfärben, nicht lagerstabil sind und Verunreinigungen in die cellulosischen Endprodukte einbringen.

Weiters konnte überraschend nachgewiesen werden, dass auch durch das Formgebungsverfahren mit einer wässrigen Badflüssigkeit die mit dem Material eingebauten ionischen Bestandteile im Faserverbund bleiben und während der kurzen Spinndauer nicht in das Spinnbad gelangen.

Im Anschluß an das Spinnverfahren wurde von der hergestellten Stapelfaser der pH-Wert nach der DIN Methode 54 275 bestimmt. Im Vergleich zu einer nicht mit Meerespflanzen und/oder Schalen von Meerestieren inkorporierten Faser kam es bei der inkorporierten Faser zu einem pH-Wert Anstieg, was auf das Herauslösen von ionischen Bestandteilen der Faser hindeutet. Durch diese Eigenschaft, verbunden mit der Körperfeuchtigkeit, kann die Bioaktivität der Haut beim Tragen von Kleidungsstücken positiv gesundheitsfördemd beeinflusst werden. Des weiteren hat sich gezeigt, dass durch die Zugabe des Materials aus Meerespflanzen und/oder Schalen von Meerestieren oder der mindestens zwei Komponenten, ausgewählt aus der Gruppe, bestehend aus Sacchariden und deren Derivaten, Proteinen, Aminosäuren, Vitaminen und Metallionen, die Fibrillierung der Fasern, hergestellt nach dem Lyocell Verfahren, reduziert wird. Somit kann die erfindungsgemäße Faser, beispielweise eine mit Algen inkorporierte Cellulosefaser, besser in der textilen Nachverarbeitung der Faser eingesetzt werden.

Trotz des Einverleibens eines Materials aus Meerespflanzen und/oder Schalen von Meerestieren oder der mindestens zwei Komponenten, ausgewählt aus der Gruppe, bestehend aus Sacchariden und deren Derivaten, Proteinen, Aminosäuren, Vitaminen und Metallionen, das im ersten Fall als Meerespflanze reich an Eisen- und Metallkonzentrationen ist, wird vorteilhafterweise keine Zersetzung einer Spinnlösung aus Cellulose, NMMNO und Wasser beobachtet. Es hat sich im Gegenteil herausgestellt, dass sich die Zersetzungstemperatur einer solchen Spinnlösung beim Zusatz von Material aus Meerespflanzen und/oder Schalen von Meerestieren sogar erhöhte. Das bedeutet, dass trotz Anwesenheit von Metallionen keine Beeinträchtigung der Stabilität der Spinnmasse beobachtet werden konnte.

Durch die Inkorporation des Materials aus Meerespflanzen und der damit verbundenen Inkorporation von Metallen können daher auch chemische Reaktionen an dem Fasermaterial durchgeführt werden, wie lonenaustauschvorgänge durch die inkorporierten Metallionen(z.B. Erhöhung der Wasserstoffionenkonzentration im Fasermaterial) oder die Deactetylierung von Chitin.

Ein weiterer, den erfindungsgemäßen Formkörpem durch die Zugabe von Material aus Meerespflanzen und/oder Schalen von Meerestieren oder von mindestens zwei Komponenten, ausgewählt aus der Gruppe, bestehend aus Sacchariden und deren Derivaten, Proteinen, Aminosäuren, Vitaminen und Metallionen verliehener Vorteil ist der gleichmäßige Einbau der Wirkstoffe in die Fasermatrix bei unterschiedlich herstellbaren Faserquerschnitten. Weiterhin ist die Verarbeitung als Monofilament oder Endlosfilamentgam möglich. Dadurch ergibt sich ein besonders guter Einsatz von technischen Artikeln.

Insbesondere, wenn der erfindungsgemäße Formkörper aus einer Polymerzusammensetzung hergestellt ist, die ausschließlich biologisch abbaubares Material enthält, ist dessen vollständige biologische Abbaubarkeit vorteilhaft.

Die erfindungsgemäßen Formkörper können als Verpackungsmaterial, Fasermaterial, non wovens , Textilverbundstoffe, Faserverbundstoffe, Faservliese, Nadelfilze, Polsterwatte, Gewebe, Gestricke, als Heimtextilien, wie Bettwäsche, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Weitere Verwendungsmöglichkeiten sind in dem Lexikon der textilen Raumausstattung, Buch und Medien Verlag Buurmann KG, ISBN 3-98047-440-2 beschrieben.

Wenn aus dem erfindungsgemäßen Formkörper in Form von Fasern ein Gewebe hergestellt wird, dann kann dieses entweder ausschließlich aus diesen Faser bestehen oder eine zusätzliche Komponente enthalten. Diese zusätzliche Komponente kann aus der Gruppe bestehend aus Baumwolle, Lyocell, Rayon, Carbacell, Polyester, Polyamid, Celluloseacetat, Acrylat, Polypropylen oder Gemischen davon ausgewählt sein. Die Fasern mit einem Material aus Meerespflanzen und/oder Schalen von Meerestieren sind in dem Gewebe vorzugsweise in einer Menge von bis zu etwa 70 Gew.-% anwesend. Das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen sind im Gewebe vorzugsweise in einer Menge von 1 bis 10 Gew.-% anwesend.

Wenn der erfindungsgemäße Formkörper als Fasermaterial oder Gewebe vorliegt, können daraus Kleidungsstücke hergestellt werden, wie Pullis, Jacken, Kleider, Anzüge, T-Shirts, Unterwäsche oder ähnliches.

Die aus den erfindungsgemäßen Fasern oder Geweben hergestellten Kleidungsstücke haben einen hohen Tragekomfort und verbessern allgemein den gesundheitlichen Zustand des dieses Kleidungsstück tragenden Individuums. Die gesundheitsverbessemde Wirkung von Material aus Meerespflanzen ist beispielsweise in JP 1228916 beschrieben.

Durch den hohen Anteil an negativen lonen in dem Material aus Meerespflanzen und/oder Schalen von Meerestieren oder den mindestens zwei Komponenten, ausgewählt aus der Gruppe, bestehend aus Proteinen, Aminosäuren, Vitaminen und Metallionen beeinflusst dieses den pH-Wert der Haut insofern positiv, als es für alkalische und damit gesunde Bedingungen auf der Haut sorgt. Außerdem erhöht sich die Temperatur der Haut beim Tragen der erfindungsgemäßen Kleidungsstücke mehr als beim Tragen eines Kleidungsstücks aus Fasern ohne das Material aus Meerespflanzen und/oder Schalen von Meerestieren oder den mindestens zwei Komponenten, ausgewählt aus der Gruppe, bestehend aus Sacchariden und deren Derivaten, Proteinen, Aminosäuren, Vitaminen und Metallionen, wodurch eine positive Wirkung auf die Durchblutung der Haut ausgeübt wird.

Die erfindungsgemäße Faser gibt aufgrund der inkorporierten Elemente über die beim Tragen, bedingt durch die Körperfeuchtigkeit, vorhandene Flüssigkeit die Wirkstoffe an den Körper weiter. Wegen des cellulosischen Materials können so atmungsaktive Kleidungsstücke hergestellt werden. Außerdem können die Wirkstoffe; wie in der Kosmetik oder Thalassotherapie üblich, der Haut gezielt zugeführt werden. Durch die Inkorporation sind die Wirkstoffe lange in der Faser oder im Gewebe sogar auch nach häufigem Waschen vorhanden.

Die über das aus den erfindungsgemäßen Fasern bestehende Gewebe zugeführten Spurenelemente sowie Vitamine können den Körper durch die remineralisierende, stimulierende sowie wärmende Wirkung unterstützen.

Wenn die erfindungsgemäßen Faser in Form von Stapelfasern oder zerkleinerten Filamenten vorliegt, können mit diesen Oberflächen von Trägem, wie Geweben oder Folien, beflockt werden. Dazu wird die Oberfläche des zu beflockenden Trägers mit einem Klebstoff behandelt und sodann werden die Stapelfasern oder zerkleinerten Filamente darauf aufgebracht.

Nachstehend wird die Erfindung anhand von Beispielen erläutert.

### Vergleichsbeispiel 1 (ohne Zumischung)

3.086 g NMMNO (59,8 %ig), 308 g MoDo, DP 500, Trocken-Gehalt 94%, 1,8 g Propylgallat (0,63% bezogen auf den Cellulosegehalt) wurden gemischt und das so erhaltene Gemisch auf 94°C erwärmt. Es wurde eine diskontinuierlich hergestellte Spinnlösung mit einem Cellulosegehalt von 11,8 % und einer Viskosität von 4.765 Pa • s erhalten. Die so erhaltene Spinnlösung wurde zu Fasern versponnen, wobei die folgenden Spinnbedingungen eingehalten wurden:

| | |
|---|---|
| Temperatur des Vorratsbehälters | = 90°C |
| Temperaturspinnblock, Düse | = 80°C |
| Spinnbad | = 4°C |
| Spinnbadkonzentration (Anfang) | = 0 % (destilliertes Wasser) |
| Spinnbadkonzentration (Ende) | = 5 % NMMNO |
| Spinnpumpe | = 20,0 cm³/min. |
| Düsenfilter | = 19200 M/cm² |
| Spinn-Düse | = 495 Loch 70 µm; Au/Pt |
| Endabzug | = 25 m/min. |

Die Fasern wurden auf 40 mm Stapellänge geschnitten, lösungsmittelfrei gewaschen und mit einer 10 g/l Avivage (50 % Leomin OR-50 % Leomin WG (stickstoffhaltiger Fettsäurepolyglykolester Fa. Clariant GmbH)) bei 45°C ausgerüstet bzw. die Fettauflage zur besseren Faserweiterverarbeitung aufgebracht und bei 105°C getrocknet. Im Anschluss an das Trocknen wurde eine Faserfeuchtigkeit von 11 % eingestellt. Ein zusätzlicher Bleichvorgang vor dem Trocknen wurde in diesem Fall nicht durchgeführt.

Das Spinnverhalten der gemäß diesem Beispiel erhaltenen Spinnlösung war gut.

**Tabelle 3:**

| Faserdaten Vergleichsbeispiel 1 | | |
|---|---|---|
| | | Vergleichbeispiel 1 |
| Feinheit - Titer | [dtex] | 1,48 |
| FB - Reißkraft trocken | [cN/tex] | 42,20 |
| FB - Reißkraft nass | [cN/tex] | 36,30 |
| FB - Reißkraft Schlinge | [cN/tex] | 15,20 |
| Höchstzugkraftdehnung - trocken | [%] | 15,50 |
| Höchstzugkraftdehnung - nass | [%] | 15,20 |
| Nassmodul | [cN/tex] | 202,00 |

### Vergleichsbeispiel 2 (ohne Zumischung; Behandlung der Filamente im Luftspalt)

Analog zu Vergleichsbeispiel 1 wurde eine Spinnlösung hergestellt. Die Spinnlösung wurde zu Fasern versponnen, wobei abweichend zu Vergleichsbeispiel 1 die Temperatur des Spinnblocks auf 95°C eingestellt wurde, sowie die Temperatur der Düse auf 105°C. Im Luftspalt zwischen Düse und Fällbad wurde die Fadenschar mit feuchter Luft (Temperatur: 20°C, Feuchte: 70%) bebtasen.
Die Versuchsdurchführung erfolgte ansonsten wie in Vergleichsbeispiel 1.

**Tabelle 4:**

| Faserdaten Vergleichsbeispiel 2 | | |
|---|---|---|
| | | Vergleichsbeispiel 2 |
| Feinheit - Titer | [dtex] | 1,25 |
| FB - Reißkraft trocken | [cN/tex] | 45,10 |
| FB - Reißkraft nass | [cN/tex] | 37,10 |
| FB - Reißkraft Schlinge | [cN/tex] | 22,10 |
| Höchstzugkraftdehnung - trocken | [%] | 15,40 |
| Höchstzugkraftdehnung - nass | [%] | 18,50 |
| Nassmodul | [cN/tex] | 234,00 |

### Belspiel 1

3.156 g NMMNO (61,4 %ig), 315 g MoDo, DP 500, Trockengehalt 94%, 1,9 g Propylgallat (0,63% bezogen auf den Cellulosegehalt) sowie 11,6 g eines Pulvers - dargestellt in Tabelle 1 - (in Summe 3,9% bezogen auf den Cellulosegehalt) wurden gemischt und auf 94°C erwärmt. Es wurde eine Spinnlösung mit einem Feststoffgehalt von 12,4 % und einer Viskosität von 6.424 Pa • s erhalten. Die so hergestellte Spinnlösung wurde wie in Vergleichsbeispiel 1 zu Fasem versponnen.

**Tabelle 4:**

| Faserdaten Beispiel 1 | | |
|---|---|---|
| | | Beispiel 1 |
| Feinheit - Titer | [dtex] | 1,40 |
| FB - Reißkraft trocken | [cN/tex] | 38,60 |
| FB - Reißkraft nass | [cN/tex] | 30,70 |
| FB - Reißkraft Schlinge | [cN/tex] | 11,40 |
| Höchstzugkraftdehnung - trocken | [%] | 12,40 |
| Höchstzugkraftdehnung - nass | [%] | 13,00 |
| Nassmodul | [cN/tex] | 199,00 |

### Beispiel 2

Analog Beispiel 1 wurden 2.951 g NMMNO (60,84 %ig), 305 g MoDo, DP 500, Trocken-Gehalt 94%, 1,8 g Propylgallat (0,63% bezogen auf den Cellulosegehalt) sowie 17,5 g des in Beispiel 1 verwendeten Gemisches (in Summe 6,1 % bezogen auf den Cellulosegehalt) gemischt und auf 94°C erwärmt. Es wurde eine Spinnlösung mit einem Feststoffgehalt von 12,9 % und einer Viskosität von 7.801 Pa • s erhalten. Die so hergestellte Spinnlösung wurde wie in Vergleichsbeispiel 1 zu Fasern versponnen.

**Tabelle 6:**

| Faserdaten Beispiel 2 | | |
|---|---|---|
| | | Beispiel 2 |
| Feinheit - Titer | [dtex] | 1,48 |
| FB - Reißkraft trocken | [cN/tex] | 36,60 |
| FB - Reißkraft nass | [cN/tex] | 32,40 |
| FB - Reißkraft Schlinge | [cN/tex] | 13,30 |
| Höchstzugkraftdehnung - trocken | [%] | 12,10 |
| Höchstzugkraftdehnung - nass | [%] | 13,50 |
| Nassmodul | [cN/tex] | 188,00 |

### Beispiel 3

Analog Beispiel 1 wurden 2.750 g NMMNO (60,3 %ig), 305 g MoDo, DP 500, Trocken-Gehalt 94%, 1,7 g Propylgallat (0,63% bezogen auf den Cellulosegehalt) sowie 11,2 g eines Pulvers - dargestellt in Tabelle 2.2 - (in Summe 4,1 % bezogen auf den Cellulosegehalt) gemischt und auf 94°C erwärmt. Es wurde eine Spinnlösung mit einem Feststoffgehalt von 13 % und einer Viskosität von 6.352 Pa **•** s erhalten. Die so hergestellte Spinnlösung wurde wie in Vergleichsbeispiel 1 zu Fasern versponnen.

**Tabelle 7:**

| Faserdaten Beispiel 3 | | |
|---|---|---|
| | | Beispiel 3 |
| Feinheit - Titer | [dtex] | 1,41 |
| FB - Reißkraft trocken | [cN/tex] | 33,40 |
| FB - Reißkraft nass | [cN/tex] | 29,20 |
| FB - Reißkraft Schlinge | [cN/tex] | 9,00 |
| Höchstzugkraftdehnung - trocken | [%] | 12,60 |
| Höchstzugkraftdehnung - nass | [%] | 8,60 |
| Nassmodul | [cN/tex] | 182,00 |

### Beispiel 4

Analog Beispiel 3 wurden 3.345 g NMMNO (59,5 %ig), 318 g MoDo, DP 500, Trocken-Gehalt 94%, 1,9 g Propylgallat (0,63% bezogen auf den Cellulosegehalt) sowie 23,6 g eines Gemisches, ähnlich dem in Beispiel 3 verwendeten Gemisches (in Summe 7,9% bezogen auf den Cellulosegehalt) gemischt und auf 94°C erwärmt. Das in diesem Beispiel verwendete Gemisch unterscheidet sich zu dem in Beispiel 3 eingesetzten vor allem durch einen höheren Kaliumgehalt sowie einen geringeren Calciumgehalt (∼ 12,6% zu ∼35%). Es wurde eine Spinnlösung mit einem Feststoffgehalt von 12,4 % und einer Viskosität von 7.218 Pa **•** s erhalten. Die so hergestellte Spinnlösung wurde wie in Vergleichsbeispiel 1 zu Fasern versponnen.

**Tabelle 8:**

| Faserdaten Beispiel 4 | | |
|---|---|---|
| | | Beispiel 4 |
| Feinheit - Titer | [dtex] | 1,42 |
| FB - Reißkraft trocken | [cN/tex] | 41,40 |
| FB - Reißkraft nass | [cN/tex] | 32,90 |
| FB - Reißkraft Schlinge | [cN/tex] | 8,30 |
| Höchstzugkraftdehnung - trocken | [%] | 11,90 |
| Höchstzugkraftdehnung - nass | [%] | 12,00 |
| Nassmodul | [cN/tex] | 212,00 |

### Beispiel 5

3.204 g NMMNO (59,5 %ig), 318 g MoDo, DP 500, Trocken-Gehalt 94,4 %, 1,9 g Propylgallat (0,63 % bezogen auf den Cellulosegehalt) und 25,4 g Braunalgen (8,5 % bezogen auf den Cellulosegehalt) Type *Laminaria* wurden gemischt und das so erhaltene Gemisch auf 94°C erwärmt. Es wurde eine diskontinuierlich hergestellte Spinnlösung mit einem Cellulosegehalt von 13,24 % und einer Viskosität von 6.565 Pa • s erhalten. Die so erhaltene Spinnlösung wurde zu Fasern versponnen, wobei die folgenden Spinnbedingungen eingehalten wurden:

| | |
|---|---|
| Temperatur des Vorratsbehälters = | 90°C |
| Temperaturspinnblock, Düse = | 80°C |
| Spinnbad = | 4°C |
| Spinnbadkonzentration (Anfang) = | 0 % (destilliertes Wasser) |
| Spinnbadkonzentration (Ende) = | 7 % NMMNO |
| Spinnpumpe = | 20,0 cm³/min. |
| Düsenfilter = | 19200 M/cm² |
| Spinn-Düse = | 495 Loch 70 µm; Au/Pt |
| Endabzug = | 30 m/min. |

Die Fasern wurden auf 40 mm Stapellänge geschnitten lösungsmittelfreigewaschen und mit einer 10 g/l Avivage (50 % Leomin OR-50 % Leomin WG (stickstoffhaltiger Fettsäurepolyglykolester Fa. Clariant GmbH)) bei 45°C ausgerüstet bzw. die Fettauflage zur besseren Faserweiterverarbeitung aufgebracht und bei 105°C getrocknet. Im Anschluß an das Trocknen wurde eine Faserfeuchtigkeit von 10% eingestellt. Ein zusätzlicher Bleichvorgang vor dem Trocknen wurde in diesem Fall nicht durchgeführt

Das Spinnverhalten der gemäß diesem Beispiel erhaltenen Spinnlösung war gut Der nachstehenden Tabelle 9 sind die physikalischen Eigenschaften der so erhaltenen Cellulosefasern zu entnehmen.

**Tabelle 9**

| | |
|---|---|
| Feinheit [dtex] | 1,42 |
| Reißkraft [cN] | 5,85 |
| Reißkraftvariation [%] | 15,8 |
| Dehnung [%] | 11,9 |
| Nassdehnung [%] | 12,0 |
| Feinheitsbezogene Reißkraft [cN/tex] | 41,4 |
| Feinheitsbezogene Nassreißkraft [cN/tex] | 32,9 |
| Feinheitsbezogene Schlingenreißkraft [cN/tex] | 8,3 |
| Nassscheuerung bei Bruch [Touren] | 10 |
| Nassscheuerungsvariation [%] | 19,7 |
| Nassmodul [cN/tex] | 212 |

Die Elementaranalysen des eingesetzten Materials aus Meerespflanzen, Braunalgen *Laminaria digitata* und der Faserprobe mit inkorporierter Braunalge ist in der nachstehenden Tabelle 10 enthalten:

**Tabelle 10**

| **Analysen [mg/kg]** | **Braun Algen Material** | **Faserprobe mit Braunalgenmaterial *Laminaria digitata* inkorporiert** |
|---|---|---|
| Natrium | 28.300 | 460 |
| Magnesium | 51.300 | 3.400 |
| Calcium | 126.000 | 8.100 |
| Chrom | 850 | 50 |
| Mangan | 670 | 55 |
| Eisen | 32.600 | 2.000 |
| Nickel | 210 | 20 |
| Kupfer | 30 | 8 |
| Molybdän | < 5 | < 5 |
| Kobalt | 19 | < 5 |

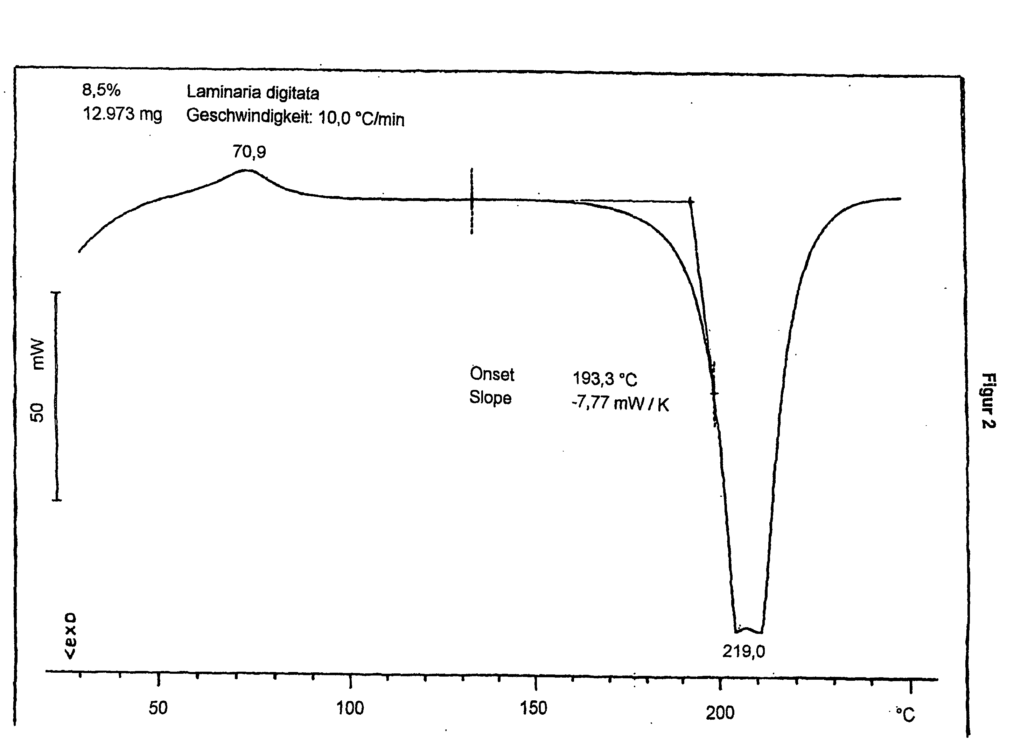

Der Figur 2 ist außerdem zu entnehmen, dass eine Spinnlösung mit 8,5 % *Laminaria digitata* gegenüber thermischer Zersetzung bis ca. 200°C stabil ist

### Beispiel 6

3.687 g NMMNO (62 %ig), 381 g MoDo, DP 500, Trockengehalt 94,4 %, 2,27 g Propylgallat (0,63 % bezogen auf den Cellulosegehalt) und 3,6 g Braunalgenmehl *Laminaria digitata* (1 % bezogen aus den Cellulosegehalt) wurden gemischt und auf 94°C erwärmt. Es wurde eine Spinnlösung mit einem Cellulosegehalt von 12,78 % und einer Viskosität von 8.424 Pa • s erhalten. Die so hergestellte Spinnlösung wurde wie in Vergleichsbeispiel 1 zu Fasern versponnen.

Die physikalischen Eigenschaften der so erhaltenen Cellulosefasern sind in der nachstehenden Tabelle 11 enthalten.

**Tabelle 11**

| | |
|---|---|
| Feinheit [dtex] | 1,40 |
| Reißkraft [cN] | 6,10 |
| Reißkraftvariation [%] | 21,8 |
| Dehnung [%] | 13,0 |
| Nassdehnung [%] | 12,7 |
| Feinheitsbezogene Reißkraft [cN/tex] | 42,4 |
| Feinheitsbezogene Nassreißkraft [cN/tex] | 37,7 |
| Feinheitsbezogene Schlingenreißkraft [cN/tex] | 8,81 |
| Nassscheuerung bei Bruch [Touren] | 14 |
| Nassscheuerungsvariation [%] | 34,7 |
| Nassmodul [cN/tex] | 254 |

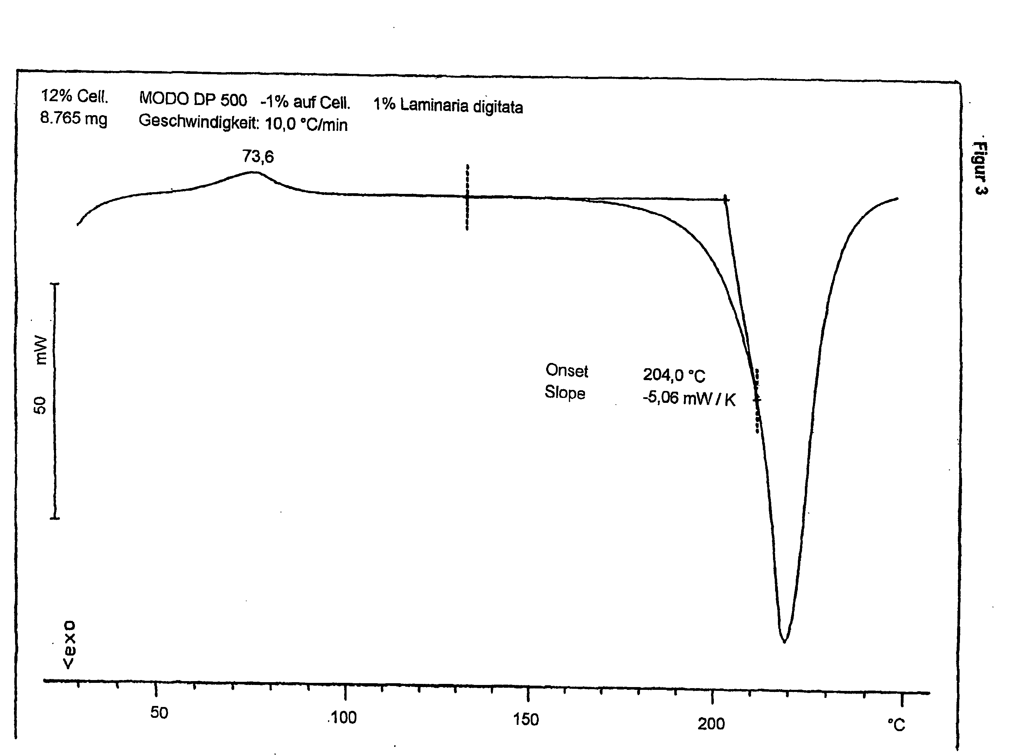

Die so erhaltenen Fasern wurden zu einem Garn versponnen. Die Verspinnung wurde unter den Bedingungen 63% relative Luftfeuchtigkeit und 20°C mittels kardieren, strecken und verspinnen mit einer Rotorspinnmaschine zu 75 g Garn mit ca. 20 tex durchgeführt. Der Figur 3 ist zu entnehmen, dass die Spinnlösung mit 1 % *Laminaria digitata*, bezogen auf den Cellulosegehalt bis zu einer Temperatur von ca. 200°C stabil ist.

### Beispiel 7

Aus einem Gemisch aus 33 Gew.-% Cellulose, 17 Gew.-% Natronlauge und 50 Gew.-% Wasser wurde durch Zugabe von 32 % Schwefelkohlenstoff bezogen auf Cellulose ein Cellulosexanthogenat hergestellt. Im Anschluss wurde das Xanthogenat durch Zugabe von verdünnter Natronlauge in eine Spinnlösung mit 6 Gew.-% Cellulose, 6 Gew.-% NaOH und im wesentlichen Wasser und Reaktionsprodukte in Folge der Xanthatherstellung durch 2-stündiges Rühren übergeführt. Zu der so erhaltenen Viskoselösung wurden der Spinnlösung 0,9 Gew.-% Material aus Braunalgen zugegeben. Die Viskoselösung wurde ca. 6 Stunden unter Vakuum zum Entgasen stehengelassen und sodann filtriert. Die so erhaltene Viskoselösung hatte einen Reifegrad von 10° Hottenroth und wurde zu Fasern versponnen.

Die Spinnbedingungen waren:

| | |
|---|---|
| Düse [n/µm] | 1.053/60 |
| Lochdurchsatz [g/Loch/min.] | 0,07 |
| Fällbadtemperatur [°C] | 30 |
| Schwefelsäure im Fällbad [%] | 10,8 |
| Natriumsulfat im Fällbad [%] | 20,0 |
| Zinksulfat im Fällbad [%] | 1,5 |
| Abzugsgeschwindigkeit [m/min.] | 36 |

Die physikalischen Eigenschaften der so erhaltenen Rayon-Fasern sind in der nachstehenden Tabelle 12 enthalten.

**Tabelle 12**

| | |
|---|---|
| Feinheit-Titer [dtex] | 1,7 |
| Feinheitsbezogene Reißkraft trocken [cN/tex] | 21,7 |
| Feinheitsbezogenen Reißkraft nass [cN/tex] | 12,4 |
| Feinheitbezogene Schlingenfestigkeit [cN/tex] | 6,0 |
| Höchstzugkraftdehnung-trocken [%] | 14,2 |
| Höchstzugkraftdehnung-nass [%] | 15,8 |
| Nassmodul [cN/tex] | 2,9 |

### Beispiel 8

Es wurden gemäß Beispiel 7 Rayonfasem hergestellt, außer, dass statt 0,9 Gew.-% 0,1 Gew.-% Braunalgenmaterial der Spinnlösung zugesetzt Wurden.

Die physikalischen Eigenschaften der so erhaltenen Viskose- oder Rayon-Fasern sind in Tabelle 13 enthalten.

**Tabelle 13**

| | |
|---|---|
| Feinheit-Titer [dtex] | 1,7 |
| Feinheitsbezogene Reißkraft trocken [cN/tex] | 23,7 |
| Feinheitsbezogene Reißkraft nass [cN/tex] | 14,1 |
| Schlingenfestigkeit [cN/tex] | 6,5 |
| Höchstzugkraftdehnung-trocken [%] | 16,9 |
| Höchstzugkraftdehnung-nass [%] | 18,5 |
| Nassmodul [cN/tex] | 3,0 |

### Vergleichsbeispiel 3

Als Vergleich wurde eine Viskosefaser gemäß Beispiel 7 hergestellt außer, dass kein Braunalgenmaterial zugesetzt wurde.

Die physikalischen Eigenschaften dieser Viskosefaser ist in der Tabelle 14 enthalten.

**Tabelle 14**

| | |
|---|---|
| Feinheit-Titer [dtex] | 1,7 |
| Feinheitsbezogene Reißkraft trocken [cN/tex] | 24,8 |
| Feinheitsbezogene Reißkraft nass [cN/tex] | 14,2 |
| Schlingenfestigkeit [cN/tex] | 6,4 |
| Höchstzugkraftdehnung-trocken [%] | 17,2 |
| Höchstzugkraftdehnung-nass [%] | 21,1 |
| Nassmodul [cN/tex] | 2,9 |

### Beispiel 9

Zur Herstellung von Cellulosecarbamat wurde zuerst eine Alkalicellulose aus einem Chemiezellstoff 92- 95% Alpha-Gehalt (Fa. Ketchikan) hergestellt. Aus der gereiften Alkalicellulose (35 Gew.-% Cell; 15 Gew.-% NaOH; 50 Gew.-% Wasser) wurde die Natronlauge mit Wasser ausgewaschen. Nach dem Abpressen der so aktivierte Cellulose (70 Gew.-% Wasser) wurden 10 kg der abgepreßten aktivierten Cellulose in einem Kneter mit Harnstoff (1,5 kg) vermischt. Dabei löst sich der Harnstoff in dem in der Cellulose vorhandenen Wasser und verteilt sich gleichmäßig in der Cellulose. Diese Zellstoffpulpe wurde in einen Reaktor, der mit Rührer und Rückflußkühler ausgestattet war, und in dem o-Xylol (30 kg) vorgelegt worden ist, überführt. Der Reaktorinhalt wurde sodann ca. 2 h bei 145 °C erwärmt und daraufhin abfiltriert.

Der so erhaltene Rückstand wurde wieder in den Reaktor zurückgeführt, in dem ca. 25 kg Wasser vorgelegt wurden. Das noch am Carbamat anhaftende Xylol wurde bei 88 °C abgestrippt. Nach der Filtration wurde das Carbamat mit heißem (50 °C) und kaltem Wasser ausgewaschen. Danach wurde das Carbamat abgepreßt.

Aus 1,02 kg diese Carbamats wurden mit 1,1 kg Natronlauge (30 Gew.-%ig), 1,30 kg Wasser und mit der entsprechenden Menge Braunalgen (0,03 kg) 3,45 kg Starklösung hergestellt. Sämtliche Reaktionsteilnehmer waren vorgekühlt, die Reaktion selbst fand bei einer Temperatur von 0 °C statt. (Zusammensetzung der Starklauge: 11,0 Gew.-% Cell, 9,5 Gew.-% NaOH)

Aus der gekühlten Starklösung wurde durch Zugabe von 1,55 kg gekühlter Natronlauge (3,03 Gew.-%ig) bei einer Temperatur von 0 °C Spinnmasse (5 kg) hergestellt. Die gekühlte Spinnmasse wurde durch einen Filter mit Feinheiten von 10-40 µm filtriert und versponnen.

Die folgenden Spinnbedingungen wurden eingehalten:

| | |
|---|---|
| Düse [n/µm] | 36/60 |
| Lochdurchsatz [g/Loch/min.] | 0,11 |
| Fällbadtemperatur [°C] | 35 |
| Schwefelsäure im Fällbad [%] | 90 |
| Natriumsulfat im Fällbad [%] | 140 |
| Abzugsgeschwindigkeit [m/min.] | 30 |

Die physikalischen Eigenschaften der so erhaltenen Carbacell® -Fasern sind der Tabelle 15 zu entnehmen.

**Tabelle 15**

| | |
|---|---|
| Feinheit-Titer [dtex] | 3,1 |
| Feinheitsbezogene Reißkraft trocken [cN/tex] | 14,8 |
| Feinheitsbezogene Reißkraft nass [cN/tex] | 5,7 |
| Schlingenfestigkeit [cN/tex] | 7,5 |
| Höchstzugkraftdehnung-trocken [%] | 4,0 |
| Höchstzugkraftdehnung-nass [%] | 4,7 |
| Nassmodul [cN/tex] | 100 |

### Beispiel 10

Es wurden Carbacell® -Fasern wie in Beispiel 9 beschrieben, hergestellt, außer, dass statt 0,6 Gew.-% Braunalgenmehl 0,1 Gew.-% der Spinnmasse zugesetzt wurden.

Die physikalischen Eigenschaften der so erhaltenen Carbacell® -Fasern sind der nachstehenden Tabelle 16 zu entnehmen.

**Tabelle 16**

| | |
|---|---|
| Feinheit-Titer [dtex] | 3,3 |
| Feinheitsbezogene Reißkraft trocken [cN/tex] | 17,8 |
| Feinheitsbezogene Reißkraft nass [cN/tex] | 5,8 |
| Schlingenfestigkeit [cN/tex] | 7,5 |
| Höchstzugkraftdehnung-trocken [%] | 4,6 |
| Höchstzugkraftdehnung-nass [%] | 5,4 |
| Nassmodul [cN/tex] | 129 |

### Vergleichsbeispiel 4

Es wurden Carbacell® -Fasern , wie in Beispiel 9 beschrieben, hergestellt, außer, dass kein Braunalgenmehl zugesetzt wurde.

Die physikalischen Eigenschaften der so erhaltenen Fasem sind der Tabelle 17 zu entnehmen.

**Tabelle 17**

| | |
|---|---|
| Feinheit-Titer [dtex] | 3,1 |
| Feinheitsbezogene Reißkraft trocken [cN/tex] | 18,0 |
| Feinheitsbezogene Reißkraft nass [cN/tex] | 5,8 |
| Schlingenfestigkeit [cN/tex] | 7,9 |
| Höchstzugkraftdehnung-trocken [%] | 4,7 |
| Höchstzugkraftdehnung-nass [%] | 5,5 |
| Nassmodul [cN/tex] | 135 |

### Beispiele 11 bis 15

Es wurden Lyocell - Cellulosefasem kontinuierlich gemäß Beispiel 5 hergestellt, wobei die jeweiligen Mengen, die Bedingungen des kontinuierlich geführten Verfahrens und die physikalischen Eigenschaften der erhaltenen Fasern in der nachstehenden Tabelle 18 aufgeführt sind.

**Tabelle 18**

| | Einheit | Beispiel 11 | Beispiel 12 | Beispiel 13 | Beispiel 14 | Beispiel 15 |
|---|---|---|---|---|---|---|
| Zellstoff | | | | | | |
| Type | | Alicell VLV | Modo Crown Dissolving | Alicell VLV | Alicell VLV | Alicell VLV |
| DP-Zellstoff | | 540 | 530 | 540 | 540 | 540 |
| Suspensions-Zulauf | kg/h | 161,8 | 161,8 | 173,0 | 167,2 | 161,7 |
| Cellulose | % | 13,0% | 13,0% | 12,0% | 12,5% | 13,0% |
| Wasser | % | 10,7% | 10,7% | 11,3% | 11,0% | 10,7% |
| NMMO | % | 76,3% | 76,3% | 76,7% | 76,5% | 76,3% |
| Lösungs Strom | kg/h | 138,5 | 138,5 | 150,0 | 144,0 | 138,5 |
| Brüdenkondensat | kg/h | 23,3 | 23,3 | 23,0 | 23,2 | 23,3 |
| Systemdruck | mbar abs. | 55 | 55 | 55 | 55 | 55 |
| Spinntemperatur | °C | 117 | 110 | 72 | 80 | 117 |
| Faserverzug | | 10,9 | 10,9 | 4,3 | 10,5 | 11,81 |
| Titer | dtex | 1,3 | 1,3 | 1,3 | 1,3 | 1,18 |
| Luftspalthöhe | mm | 20 | 20 | 7 | 12 | 20 |
| Luftmenge | Nm³/h | 130 | 130 | 130 | 180 | 135 |
| Lufttemperatur | °C | 17,5 | 18,5 | 17,2 | 17,9 | 19 |
| Lochdurchsatz | g/loch min | 0,030 | 0,060 | 0,028 | 0,134 | 0,028 |
| Lochdurchmesser | µ | 100 | 100 | 65 | 100 | 100 |
| Braunalgenpulver Menge | g/h | 181,9 | 182,3 | 1528,0 | 1531,8 | 2704,0 |
| Fällbadtemperatur | °C | 20 | 20 | 6 | 6 | 20 |
| Spinnbad-Konzentration | % NMMO | 20 | 20 | 20 | 20 | 20 |
| Endabzug | m/min | 35 | 70 | 30 | 150 | 35 |
| Titer | dtex | 1,40 | 1,42 | 1,38 | 1,40 | 1,21 |
| Festigkeit trocken | cn/tex | 42,1 | 41,4 | 41,8 | 42,4 | 41 |
| Dehnung trocken | % | 12,8 | 11,9 | 13,0 | 13,2 | 13,8 |
| Nassfestigkeit | cn/tex | 32,9 | 34,8 | 37,7 | 37,7 | 33,4 |
| Nassdehnung | % | 12,0 | 12,3 | 12,7 | 12,0 | 12,8 |
| Schlingenfestigkeit | cn/tex | 15,4 | 13 | 8,3 | 8,9 | 13,8 |
| Nassmodul | cn/tex | 238 | 254 | 212 | 212 | 242 |

### Beispiel 16

Von den nach Vergleichsbeispiel 1 und 2 und nach Beispiel 1 bis 4 hergestellten Fasern wurden Kryobrüche in flüssigem Stickstoff hergestellt. Davon wurden Aufnahmen mittels eines Feldemissions-Rasterelektronenmikroskops (Joel 6330 F) nach Besputtem der Fasern mit Platin gemacht.

Die gemäß Vergleichsbeispiel 1 oder 2 nach dem Standard-Verfahren hergestellte Faser zeigt einen splittrigen Bruch, die fibrilläre Struktur ist deutlich an der Bruchfläche zu erkennen. Die starke Orientierung der Fibrillen ist an den sich abzeichnenden Längsriefen und an der stark zerklüfteten Struktur entlang der Längsachse zu sehen.

Die Aufnahmen der Fasern aus den Beispielen 1 bis 4 zeigen ein ganz anderes Bild. Deutlich zu erkennen sind die teilweise stumpfen und sauberen Bruchflächen. Weiters ist erkennbar, dass die bei der Faser des Vergleichsbeispiels 1 ausgeprägte hohe Längsorientierung bei den Beispielen 1 bis 4 weit weniger ausgeprägt ist.

Anhand der REM-Aufnahmen wurden markante Unterschiede in der Faserstruktur festgestellt. Vor allem die stark zurückgedrängte Längsorientierung zeigt, dass die erfindungsgemäße Verwendung von Material aus Meerespflanzen und/oder Schalen von Meerestieren oder von mindestens zwei Komponenten, ausgewählt aus der Gruppe, bestehend aus Sacchariden und deren Derivaten, Proteinen, Aminosäuren, Vitaminen und Metallionen bei der Herstellung von Cellulosefasern zu einer geringeren Fibrillierung der Fasem führt.

Besonders interessant und unerwartet war, dass Gemische mit unterschiedlichen Inhaltsstoffen diesen Effekt zeigen, da alle bisher bekannten Defibrillierungsmittel Vernetzungsmittel sind. Die geringere Fibrillierung ist vermutlich auf eine Veränderung der Kristallisationseigenschaften der Cellulose während des Extrudierens zurückzuführen.

## Patentansprüche

1. Polymerzusammensetzung, umfassend ein biologisch abbaubares Polymer, ausgewählt aus der Gruppe, bestehend aus Cellulose, modifizierter Cellulose oder Gemischen davon, und ein Material aus Meerespflanzen und/oder Schalen von Meerestieren, wobei das Material aus Meerespflanzen und/oder Schalen von Meerestieren in einer Menge von 0,1 bis 30 Gew.-%, bezogen auf das Gewicht des biologisch abbaubaren Polymers, vorliegt.

2. Polymerzusammensetzung nach Anspruch 1, wobei das Material aus Meerespflanzen ausgewählt ist aus der Gruppe, bestehend aus Algen, Kelp, Seegras und Gemischen davon.

3. Polymerzusammensetzung, nach Anspruch 2, wobei das Material aus Meerespflanzen ausgewählt ist aus der Gruppe, bestehend aus Braunalgen, Grünalgen, Rotalgen, Blaualgen und Gemischen davon.

4. Polymerzusammensetzung nach einem der vorstehenden Ansprüche, wobei das Material aus Schalen von Meerestieren ausgewählt ist aus der Gruppe, bestehend aus Meeressedimenten und zerkleinerten Schalen von Krabben, Hummem, Krebsen und Muscheln und Gemischen davon.

5. Polymerzusammensetzung nach einem der vorstehenden Ansprüche, wobei das biologisch abbaubare Polymer Cellulose ist und das Material aus Meerespflanzen Algen sind.

6. Polymerzusammensetzung, umfassend ein biologisch abbaubares Polymer, ausgewählt aus der Gruppe, bestehend aus Cellulose, modifizierter Cellulose und Gemischen davon, und mindestens zwei Komponenten, ausgewählt aus der Gruppe, bestehend aus Sacchariden und deren Derivaten, Proteinen, Aminosäuren, Vitaminen und Metallionen, wobei die mindestens zwei Komponenten in einer Menge von 0,1 bis 30 Gew.-%, bezogen aus das Gewicht des biologisch abbaubaren Polymers, vorliegen.

7. Polymerzusammensetzung nach Anspruch 6, wobei mindestens drei Komponenten anwesend sind.

8. Polymerzusammensetzung nach Anspruch 6, wobei mindestens vier Komponenten anwesend sind.

9. Polymerzusammensetzung nach einem der Ansprüche 6 bis 8, wobei die mindestens zwei Komponenten ausgewählt sind aus der Gruppe, bestehend aus Sacchariden und deren Derivaten und Aminosäuren.

10. Formkörper, umfassend eine Polymerzusammensetzung nach einem der vorstehenden Ansprüche.

11. Formkörper nach Anspruch 10, wobei der Formkörper ausgewählt ist aus der Gruppe, bestehend aus Behältern, Folien, Membranen, Geweben und Fasern.

12. Formkörper nach Anspruch 11, wobei die Fasern Stapelfasern, Mono- oder Endlosfilamente sind.

13. Verwendung des Formkörpers nach einem der Ansprüche 10 bis 12 als Verpackungsmaterial oder Fasermaterial.

14. Verwendung des Formkörpers nach einem der Ansprüche 10 bis 12 in Form von Fasermaterial als Mischungskomponente zur Herstellung von Garnen.

15. Verwendung des Formkörpers nach einem der Ansprüche 10 bis 12 in Form von Fasermaterial zur Herstellung von Vliesstoffen oder Geweben.

16. Verwendung des Formkörpers nach einem der Ansprüche 10 bis 12 in Form von Fasermaterial zur Herstellung von Vliesstoffen oder Geweben, wobei in dem Vliesstoff oder Gewebe zusätzlich eine Komponente ausgewählt aus der Gruppe, bestehend aus Baumwolle, Lyocell, Rayon, Carbacell, Polyester, Polyamid, Celluloseacetat, Acrylat, Polypropylen oder Gemischen davon anwesend ist.

17. Verwendung des Formkörpers nach Anspruch 16, wobei 0,1 bis 30 Gew.-% der zusätzlichen Komponente enthalten sind.

18. Gewebe, umfassend einen Formkörper nach einem der Ansprüche 10 bis 12.

19. Vliesstoff, umfassend einen Formkörper nach einem der Ansprüche 10 bis 12.

20. Kleidungsstück, umfassend einen Formkörper nach einem der Ansprüche 10 oder 12.

21. Verfahren zur Herstellung eines Formköpers nach einem der Ansprüche 10 bis 12, umfassend die folgenden Schritte:
(A) kontinuierliches oder diskontinuierliches Mischen des biologisch abbaubaren Polymers und des Materials aus Meerespflanzen und/oder Schalen von Meerestieren oder der mindestens zwei Komponenten, ausgewählt aus der Gruppe, bestehend aus Sacchariden und deren Derivaten, Proteinen, Aminosäuren, Vitaminen und Metallionen, wobei das Material aus Meerespflanzen und/oder Schalen von Meerestieren oder die mindestens zwei Komponenten, ausgewählt aus der Gruppe, bestehend aus Sacchariden und deren Derivaten, Proteinen, Aminosäuren, Vitaminen und Metallionen in einer Menge von 0,1 bis 30 Gew.-%, bezogen auf das Gewicht des biologisch abbaubaren Polymers, vorliegen,
(B) Herstellen einer verformbaren Masse,
(C) Verarbeiten der in (B) erhaltenen Masse zu einem Formkörper, und
(D) Nachbehandeln des hergestellten Formkörpers.

22. Verfahren nach Anspruch 21, wobei ein Formkörper nach einem der Ansprüche 10 bis 12 hergestellt wird.

## Claims

1. Polymer composition comprising a biodegradable polymer selected from the group consisting of cellulose, modified cellulose or mixtures thereof, and a material of marine plants and/or shells of marine animals, wherein the material of marine plants and/or shells of marine animals is present in an amount of 0.1 to 30% by wt., based on the weight of the biodegradable polymer.

2. Polymer composition according to claim 1, wherein the material of marine plants is selected from the group consisting of algae, kelp, eelgrass and mixtures thereof.

3. Polymer composition according to claim 2, wherein the material of marine plants is selected from the group consisting of brown algae, green algae, red algae, blue algae and mixtures thereof.

4. Polymer composition according to any one of the preceding claims, wherein the material of shells of marine animals is selected from the group consisting of marine sediments and comminuted shells of shrimps, lobsters, crawfish and mussles and mixtures thereof.

5. Polymer composition according to any one of the preceding claims, wherein the biodegradable polymer is cellulose and the material of marine plants are algae.

6. Polymer composition comprising a biodegradable polymer selected from the group consisting of cellulose, modified cellulose and mixtures thereof, and at least two components selected from the group consisting of saccharides and their derivatives, proteins, amino acids, vitamins and metal ions, wherein the at least two components are present in an amount of 0.1 to 30% by wt., based on the weight of the biodegradable polymer.

7. Polymer composition according to claim 6, wherein at least three components are present.

8. Polymer composition according to claim 6, wherein at least four components are present.

9. Polymer composition according to any one of claims 6 to 8, wherein the at least two components are selected from the group consisting of saccharides and their derivatives and amino acids.

10. Molded article comprising a polymer composition according to any one of the preceding claims.

11. Molded article according to claim 10, wherein the molded article is selected from the group consisting of containers, films, membranes, fabrics and fibers.

12. Molded article according to claim 11, wherein the fibers are staple fibers, mono- or endless filaments.

13. Use of the molded article according to any one of claims 10 to 12 as packaging material or fiber material.

14. Use of the molded article according to any one of claims 10 to 12 in the form of fiber material as a mixing component for producing yams.

15. Use of the molded article according to any one of claims 10 to 12 in the form of fiber material for producing nonwoven or woven fabrics.

16. Use of the molded article according to any one of claims 10 to 12 in the form of fiber material for producing nonwoven or woven fabrics, wherein the nonwoven or woven fabric additionally contains a component selected from the group consisting of cotton, lyocell, rayon, carbacell, polyester, polyamide, cellulose acetate, acrylate, polypropylene, or mixtures thereof.

17. Use of the molded article according to claim 16, wherein 0.1 to 30% by wt. of the additional component is contained.

18. Woven fabric comprising a molded article according to any one of claims 10 to 12.

19. Nonwoven fabric comprising a molded article according to any one of claims 10 to 12.

20. Garment comprising a molded article according to any one of claims 10 or 12.

21. A method for producing a molded article according to any one of claims 10 to 12, comprising the following steps:
(A) continuous or discontinuous mixing of the biodegradable polymer and of the material of marine plants and/or shells of marine animals or the at least two components selected from the group consisting of saccharides and their derivatives, proteins, amino acids, vitamins and metal ions, wherein the material of marine plants and/or shells of marine animals or the at least two components selected from the group consisting of saccharides and their derivatives, proteins, amino acids, vitamins and metal ions are present in an amount of 0.1 to 30% by wt., based on the weight of the biodegradable polymer,
(B) producing a moldable mass,
(C) processing the mass obtained in (B) into a molded article, and
(D) subjecting the produced molded article to an aftertreatment.

22. Method according to claim 21, wherein a molded article is produced according to any one of claims 10 to 12.

## Revendications

1. Composition polymère comprenant un polymère biodégradable choisi dans le groupe consistant en la cellulose, la cellulose modifiée ou leurs mélanges, et un matériau provenant de plantes marines et/ou de coquilles ou carapaces d'animaux marins, où le matériau provenant de plantes marines et/ou de coquilles ou carapaces d'animaux marins est présent en une quantité de 0,1 à 30 % en poids par rapport au poids du polymère biodégradable.

2. Composition polymère selon la revendication 1 où le matériau provenant de plantes marines est choisi dans le groupe consistant en les algues, le kelp, le goémon et leurs mélanges.

3. Composition polymère selon la revendication 2 où le matériau provenant de plantes marines est choisi dans le groupe consistant en les algues brunes, les algues vertes, les algues rouges, les algues bleues et leurs mélanges.

4. Composition polymère selon l'une des revendications précédentes où le matériau provenant de coquilles ou carapaces d'animaux marins est choisi dans le groupe consistant en les sédiments marins et les coquilles ou carapaces broyées de crevettes, de homards, de crabes et de moules et leurs mélanges.

5. Composition polymère selon l'une des revendications précédentes où le polymère biodégradable est la cellulose et le matériau provenant de plantes marines est constitué par des algues.

6. Composition polymère comprenant un polymère biodégradable choisi dans le groupe consistant en la cellulose, la cellulose modifiée et leurs mélanges, et au moins deux composants choisis dans le groupe consistant en les saccharides et leurs dérivés, les protéines, les aminoacides, les vitamines et les ions métalliques, où les deux composants au moins sont présents en une quantité de 0,1 à 30 % en poids par rapport au poids du polymère biodégradable.

7. Composition polymère selon la revendication 6 où au moins trois composants sont présents.

8. Composition polymère selon la revendication 6 où au moins quatre composants sont présents.

9. Composition polymère selon l'une des revendications 6 à 8 où les deux composants au moins sont choisis dans le groupe consistant en les saccharides et leurs dérivés et les aminoacides.

10. Corps mis en forme comprenant une composition polymère selon l'une des revendications précédentes.

11. Corps mis en forme selon la revendication 10 où le corps mis en forme est choisi dans le groupe consistant en les récipients, les feuilles, les membranes, les tissus et les fibres.

12. Corps mis en forme selon la revendication 11 où les fibres sont des fibres à filer, des monofilaments ou des filaments continus.

13. Utilisation du corps mis en forme selon l'une des revendications 10 à 12 comme matériau d'emballage ou matériau fibreux.

14. Utilisation du corps mis en forme selon l'une des revendications 10 à 12 sous forme de matériau fibreux comme composant d'un mélange pour la production de fils.

15. Utilisation du corps mis en forme selon l'une des revendications 10 à 12 sous forme de matériau fibreux pour la production d'étoffes nappées ou de tissus.

16. Utilisation du corps mis en forme selon l'une des revendications 10 à 12 sous forme de matériau fibreux pour la production d'étoffes nappées ou de tissus, où un composant choisi dans le groupe consistant en le coton, le lyocell, la rayonne, le carbacell, un polyester, un polyamide, l'acétate de cellulose, un acrylate, le polypropylène ou leurs mélanges est présent en outre dans l'étoffe nappée ou le tissu.

17. Utilisation du corps mis en forme selon la revendication 16 où 0,1 à 30 % en poids du composant supplémentaire sont contenus.

18. Tissu comprenant un corps mis en forme selon l'une des revendications 10 à 12.

19. Etoffe nappée comprenant un corps mis en forme selon l'une des revendications 10 à 12.

20. Vêtement comprenant un corps mis en forme selon l'une des revendications 10 ou 12.

21. Procédé de production d'un corps mis en forme selon l'une des revendications 10 à 12 comprenant les étapes suivantes :
(A) mélange continu ou discontinu du polymère biodégradable et du matériau provenant de plantes marines et/ou de coquilles ou carapaces d'animaux marins ou des deux composants au moins choisis dans le groupe consistant en les saccharides et leurs dérivés, les protéines, les aminoacides, les vitamines et les ions métalliques, où le matériau provenant de plantes marines et/ou de coquilles ou carapaces d'animaux marins ou les deux composants au moins choisis dans le groupe consistant en les saccharides et leurs dérivés, les protéines, les aminoacides, les vitamines et les ions métalliques sont présents en une quantité de 0,1 à 30 % en poids par rapport au poids du polymère biodégradable,
(B) production d'une masse déformable,
(C) transformation de la masse obtenue en (B) en un corps mis en forme et
(D) post-traitement du corps mis en forme produit.

22. Procédé selon la revendication 21 où un corps mis en forme selon l'une des revendications 10 à 12 est produit.
